# EUROPEAN PATENT SPECIFICATION

(11) **EP 0 852 440 B1**
(45) Date of publication and mention of the grant of the patent: **20.09.2006**
(21) Application number: 97120993.7
(22) Date of filing: 28.11.1997
(51) Int. Cl.: H04L 29/06, G06F 1/00

(54) **Network data transmission systems**
Netzwerk-Daten-Ubertragungssystem
Système de transmission de données à travers un réseau

(30) Priority: 07.01.1997 JP 99397
(43) Date of publication of application: 08.07.1998
(73) Proprietor: FUJITSU LIMITED, Kawasaki-shi, Kanagawa 211-8588 (JP)
(72) Inventor: Abe, Hiroyuki, c/o Fujitsu Ltd., Kawasaki-shi, Kanagawa 211 (JP); Muraki, Izumi, c/o Bab-ili Inc., Fuchu-shi, Tokyo 183 (JP); Yoshizawa, Seiji, Nakahara-ku, Kawasaki-shi, Kanagawa 211 (JP); Kaneko, Akitoshi, Nakahara-ku, Kawasaki-shi, Kanagawa 211 (JP); Tsuda, Kazuaki, Nakahara-ku, Kawasaki-shi, Kanagawa 211 (JP)
(74) Representative: Sunderland, James Harry

(56) References cited:
- WO-A-93/05483
- WO-A-96/35158
- GB-A- 2 245 724
- US-A- 5 086 434
- US-A- 5 524 052
- "PRODUCT MODULE FINGERPRINTING" IBM TECHNICAL DISCLOSURE BULLETIN, IBM CORP. NEW YORK, US, vol. 37, no. 10, 1 October 1994 (1994-10-01), page 687 XP000475829 ISSN: 0018-8689

## Description

The present invention relates to computer networks, and in particular to data transmission systems for data transmitted across such networks.

According to the present invention there is provided a data transmission system providing means for indicating the validity of the provenance of data transmitted across a computer network, for example the Internet, the system comprising
a memory unit, for example in an Internet server, storing data intended for transmission across the network,
means operable to retrieve data from the memory unit in response to a request, by a transmission requesting terminal, for transmission of the data,
means operable, in response to said request, to generate time information related to the time of receipt of said request,
combining means operable to produce, from the data retrieved from the memory unit and the time information, combined data which is allocated to said request,
a transmission unit for transmitting the combined data to the transmission requesting terminal across the network.

This data transmission system, providing combined data including time information, enables the validity of the provenance of the data to be determined.

The transmission requesting terminal includes means for displaying the time information contained in the combined data received thereby from the network, and means for determining, and for example displaying, a current time upon display of the time information contained in the combined data. Thereby, if the time information included in the combined data is determined to closely coincide with the current time upon display at the transmission requesting terminal this is taken as an indication that the transmitted data is of valid provenance, and if the time information included in the combined data is determined not to closely coincide with the current time upon display, this is taken as an indication that the transmitted combined data is copied or pirated data of invalid provenance which may thus may be associated with corrupted or altered network routing or link information.

It will be appreciated that the inventors have had the insight that in networks, particularly in public or open networks such as the Internet, there is a need for a data transmission system which enables users to assess the validity of the provenance of data transmitted across the network, i.e. to be able to determine that data apparently originating from a particular source actually does originate from that source rather than from an illegitimate or mimic source. For example, an Internet or World Wide Web home page may provide an image or other marker offering a link to another home page, which is activated by clicking on the image or marker. It is, however, easy to copy the image data, and also to change the "link" or routing destination associated with the image, so that when a user clicks on the copy image the user is linked not to the correct or legitimate page but to an illegitimate or mimic page. For instance, an image offering a link to a reputable institution, e.g. offering information for instance about legitimate investment opportunities, could be copied and the link changed to take the user to a page associated with an illegitimate undertaking. An image offering access to an on-line banking service could, conceivably, be copied and the routing destination associated with the image changed to take the user not to the banking institution offering the service but to a mimic page which, mimicking the banking institution page, requests input of the user's bank account number, password, PIN, TANs, etc. This information could then be stored at the source of the mimic page and, conceivably, improperly used by the mimic page operator to access the user's account with the banking institution, to perform illegitimate transactions.

In general, one way of offering information or services on the Internet is by way of an institutional, a company or a private home page. Information and service providers or "advertisers" are beginning to notice the possibilities of using a home page as an "advertisement" medium, i.e. as a medium for indicating the availability of information and/or services, and for providing links to such information or services, because a home page can attract many persons who are interested in the kinds of information or services offered or "advertised".

Thus, it is becoming increasingly common to supply "advertisement" information about a product or service on the Internet by providing on the home page of an information offering service the company name of the product or service along with an image and profile. An interested network user or consumer can go directly to the home page of the product or service by clicking on the image.

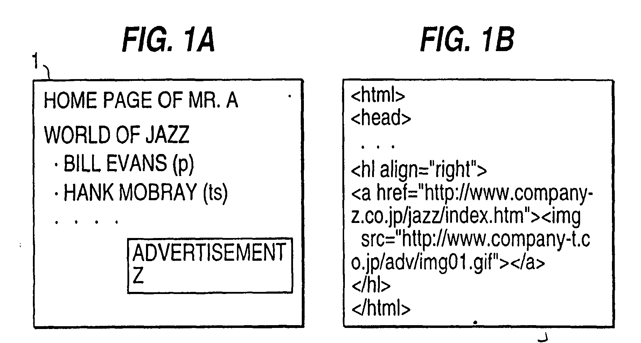

As an example, Fig. 1 shows the home page of Mr. A concerning jazz and including an "advertisement" of the home page Z providing information about jazz. The left part of Fig. 1 represents a display realized on a computer by a browser which interprets the HTML format source at the right side of Fig. 1.

A data or information offering section, or "advertisement" section, in Fig. 1 corresponds to the part inserted between the tags <h1 align = "right"> and </h1>. This source has the following meaning. The image file designated by "img src =" indicates the location of the image file of "advertisement" Z displayed by the browser. the uniform resource locator (URL) designated by "a href =" indicates the routing destination of the advertiser's home page to where the browser transfers when the image file of advertisement Z is clicked. Therefore, in this example, when the image file of the advertisement Z is clicked, the home page corresponding to the address "http://www.company-z.co.jp/jazz/index.htm" is retrieved.

As indicated above, the inventors have realised that one disadvantage of the above scheme is that the existing "advertisement" information can be copied easily by anyone who desires because such information is only image data. Moreover, as indicated above, it is also easy to change the routing destination when a user "clicks" on the relevant image data. Namely, a person can easily pretend to be another person by copying the image file designated by "img src =", then rewriting the URL of the routing destination designated by "a href =", for example, into the URL of the impersonating person's own home page and then placing such URL on the Internet.

Therefore, it is also possible for a person to achieve an illegal purpose by pretending to be another person, in the manners described above, or a company could increase access to its own home page by posing as another company. In this way, an illegal profit could be obtained by, for example, posing as a competitor on an online shopping service. Similarly, a person could pose as another person or company and set the routing destination of the entrance information to an obscene home page, with the intention of causing the other person or company to lose its reputation.

WO 96/35158 discloses a management method and an apparatus for copyright protection of programs-on-demand. That document especially deals with the selling and purchasing of a program via a computer communication network and the problem of providing a copyright protection for a program purchased in that way. The copyright protection is achieved in that the program purchased via the computer communication network contains a detailed use restriction contents of the program and in that program service is accomplished within the scope of the use restriction contents by storing the received program and the program use restriction contents. A requested program can only be purchased if the user identification number of the purchaser corresponds to the copy right management system to be managed by the base station of the system. Only if the user identification number is discriminated as a corresponding user identification number, the requested program is supplied together with the program use restriction contents to control the program to be performed within the scope of the program use restriction contents and to protect the copyright of the program which is supplied via the communication network.

In IBM technical disclosures bulletin volume 37, no. 10, October 1994, there is disclosed a method for adding a "finger print" to product modules so that their owner and integrity can be determined. The "finger print" appendage of the executable modules is added before building the final product diskettes. The "finger print" contains, inter alia, the date and time of creation of the module. The "finger print" information added can only be seen by a special finger print display program created for this purpose.

US 5,524,052 discloses a communication network access method and system. Especially, that document is directed to the determination of the integrity and the authenticity of command frames, management frames and the like that are issued from a network node by an authorized managing entity or network manager. According to that document, a command to the network comprises a network management frame which contains a clear text (unencrypted) management command field and a security field. The management frame is sent to the network by an authorized managing entity. The management frame is addressed to a managing station or agent.

However, none of the mentioned documents deals with the problems mentioned above.

For the reasons discussed above there is a need for a data transmission system providing a means of indicating the validity of the provenance of data transmitted across a network such as the internet, in particular in situations when enhanced assurance of the veracity or valid provenance of the data is required. This need applies to a variety of kinds of transmitted data, for example advertisements, and involves a need to develop a technology to control or detect such improper copying as is mentioned above.

The data transmission system according to claim 1 and computer-readable medium according to claim 6, provided by the present invention, providing means for indicating the validity of the provenance of data transmitted across a computer network, meet this need.

Thus, an embodiment of the present invention can for instance enable a user to determine whether an image file is a genuine file or is a literally-copied file even if the information image or advertisement (image file) on the Internet is literally-copied.

The inventors have had the insight that even if literal copying is effected for an illegal or improper purpose, as explained above, a copier cannot achieve such an illegal or improper purpose as is described above, if it can be determined by the user, for example at a glance, whether or not the image data and routing destination are genuine. Thereby, for example, the reputation of the institution or company which has presented a link to information or a service or an advertisement will not be damaged through illegal actions involving information available on the Internet.

Only for illustrative purposes there is also described a data transmission system for the one-time only, transmission of one-time data across a computer network, for example the Internet, to a transmission requesting terminal, the system comprising
means operable, upon receipt of a request for the transmission of one-time data by the transmission requesting terminal, to generate a session identifier which serves to uniquely identify the communication session with the transmission requesting terminal,
generator means operable to generate the one-time data when the request for the transmission of data by the transmission requesting terminal is received, the one-time data being in a code data format (non-image format),
means operable to store the one-time data in association with the session identifier,
conversion means operable to convert the generated one-time data into image data, for example in GIF format, the image data carrying an image or representation of the one-time data,
a transmission unit operable to transmit the image data to the transmission requesting terminal,
means operable to erase from the system, or to block or otherwise make inaccessible, stored image data, for example a GIF file, relating to the one-time data, after one-time transmission of the image data,
means operable, in response to a repeat request from the transmission requesting terminal, in the same communication session, for the transmission of one-time data, for example in response to a reload command issued to an Internet browser at the transmission requesting terminal, to detect that one-time data has already been stored in association with the session identifier, and to prevent the generator means generating new one-time data.

It will be appreciated that the inventors have had the insight that there is a need for a data transmission system which provides for one-time only transmission of one-time data across a computer network, for example the Internet, to a transmission requesting terminal, such that a user can obtain such one-time data once only in the course of a communication session with the source of the one-time data.

Such one-time data may, for example, be needed for use in controlling or validating user access to further data, information or services, or as part of an encryption key used for encrypting data subsequently sent by the user across the network.

For example, a particular source of information or of a service which is very popular or in great demand may wish to restrict user access to once per session, for instance by preventing the user's Internet browser from reloading the page containing the relevant information or service during the session. With the data transmission system of the present invention, loading of the desired page may be made dependent upon the user having previously requested and received the one-time data, and having used that one-time data to gain access to the desired page. The system then notes that the one-time data has been used for the current session, so that it cannot be re-used, and the system will not provide the user with new one-time data in the current session.

A data transmission system in accordance with the invention, providing means of restricting user access, may find application in procedures used for the encouragement of users to access an offered service or offered information, or an "advertisement".

For example, when conducting an advertising business on the Internet, it is desirable to give incentives to present advertisements on home pages and to link to an advertised page after a home page has been accessed which presents an advertisement for the advertised page. The data transmission system of the present invention, and the corresponding method, can be used to provide incentives by distributing one-time data as "lottery tickets" and sending a prize to those who receive "lucky numbers" in the "lottery". At this time, there has been no site where a speed lottery has been realized on the Internet.

In the above example of an advertisement, an embodiment of the present invention may route a user to a "lottery ticket" (one-time data) issuing page when the routing information has been processed. The address of the ticket issuing page is written directly into the HTML source of the advertising home page. The lucky number is then picked from the issued ticket issuing numbers.

However, Internet browsers are capable of storing the URL of the ticket issuing page as a bookmark. Therefore, there is a disadvantage in that, in the absence of the present invention, a person could repeatedly obtain a lucky number without viewing an advertisement each time. However, with the data transmission system of the present invention, it can be provided that a user can obtain only one "lottery ticket" per session.

Further, a data transmission system embodying the present invention for the one-time only transmission of one-time data across a computer network, may find application in situations where an enhanced level of security is needed, for instance for on-line banking.

For example, in on-line banking, in response to the user starting a session with the banking service, one-time data may be sent from the banking service server to the user's terminal. This one-time data is then associated, in the memory of the server, with a unique session identifier. For greater security, this one-time data is sent to the user's terminal as an image file, for the user then to key in the one-time data at his terminal. This one-time data may then used by the user's software in the encryption or scrambling of all subsequent information sent by the user to the banking service during the session. Thus, if the source of an illegitimate mimic page is incapable of sending appropriate such one-time data to the user, the user will not return data to the mimic page source. Even if the source of the illegitimate mimic page were so sophisticated as to be capable of sending apparently appropriate one-time data to the user, return data from the user (account number, password, PIN, TAN) may be encrypted using the one-time data. The mimic page operator cannot then improperly use the encrypted data to directly access the user's account with the banking institution, to perform illegitimate transactions. Even if the mimic page operator is aware of the value indicated by the one-time data and attempts to decrypt the data returned by the user, an improved level of security is afforded for the user because on the basis of a single example of one-time data, in one session, it is unlikely that the mimic page operator will be able to analyze and remove encryption based for example upon interaction between the one-time data and user data, for example a password or number, unknown to the mimic page operator (which user data is never sent across the network and which interaction may be of a sophisticated nature known only to the legitimate banking institution).

According to the present invention there is also provided a system for classifying and conditionally acting in response to data transmitted across a computer network, for example the Internet, the system comprising,
memory means storing classification criteria data,
generation means operable in response to a transmission request from a transmission requesting terminal to generate data for transmission,
memory means for storing the generated data,
timing and memory means operable to provide and store a time at which the data for transmission is generated,
transmission means operable to transmit the generated data to the transmission requesting terminal and also to transmit to the transmission requesting terminal program code effective at that terminal to request the user of the terminal to effect a data entry and sending procedure, dependent upon the generated data received at the terminal,
classification means operable to determine with reference to the classification criteria data whether data entry has been correctly effected, and to conditionally act in dependence upon the result of the determination and the stored time at which the generated data was generated by the generation means,
transmitting means operable to transmit to the transmission requesting terminal either first or second program code, dependent upon the conditional action of the classification means.

Such a system according to the present invention, for classifying and conditionally acting in response to data transmitted across a computer network, can find application in relation to a "lottery" as described above. For example, having received as generated (one-time) data a "lottery ticket" with a lottery number as an image file, the user may be called upon to enter that number for transmission to the system to determine whether that number is a "lucky" or "winning" number. Depending upon correct entry of the number (so that it coincides with the generated one-time data or "lottery ticket" issued to the user in the current session) and depending upon the time of issue of the number (i.e. time of generation of the one-time data, as stored in the system memory unit) and/or other classification criteria data (such as stored winning numbers) a classification may be made as to whether the number wins a prize in the lottery. If a prize is won, first program code may be transmitted which causes display of the prize won and, for instance, requests address information for mailing of the prize. If a prize has not been won, second program code may be transmitted which causes display of a different message.

Such a system may also find application in other fields, for example on-line banking, in particular in situations when enhanced access security or access authorisation is required. For instance, in response to received generated (one-time) data the user may be required to enter response data, within a certain period of time, for example based upon some combination or permutation of the one-time data and user data known only to the user and the banking institution, and this response data may then be classified, by reference to the classification criteria data, as correct or incorrect, and depending upon the classification result the transmitting means may transmit first program code, for example a code module which fully enables the on-line banking software at the user's terminal, or a second program code, for example a code module which disables the on-line banking software and attempts to download from the user terminal identity information which might be used to identify the user (who may be attempting an improper or illegitimate access to the on-line banking service).

Reference will now be made, by way of example, to the accompanying drawings, in which:-
Fig. 1A is a display of a home page with an advertisement on the existing Internet.
Fig. 1B is HTML source that generates the display in Fig. 1A.
Fig. 2 is a system configuration diagram of a system which can implement embodiments of the present invention.
Fig. 3 is a flowchart of a first embodiment of the present invention.
Fig. 4 is a data format diagram of the session management database for administering a session.
Fig. 5 is a data format diagram of the registered database for administering registered URLs.
Fig. 6 is a data format diagram of the advertisement information database for administering the advertisement information.
Fig. 7 is a flowchart for combining the base image and system time.
Fig. 8 is a diagram showing a display of a home page with the advertisement information generated by the present invention, and current system time.
Fig. 9 is a flowchart of a second embodiment of the present invention.
Fig. 10 is a data format diagram of the ticket management database for administering ticket issuing numbers and session IDs.
Fig. 11 is a data conversion diagram showing conversion of code data of the ticket issuing number into image data.
Fig. 12A is a display for ticket issuing number input displayed by the browser of a user when acquired properly.
Fig. 12B is HTML source that generates the display in Fig. 12A.
Fig. 12C is a display for ticket issuing number input displayed by the browser of a user when acquired improperly.
Fig. 12D is HTML source that generates the display in Fig. 12C.
Fig. 13 is a flowchart of operations for validation of ticket issuing numbers and selection of lucky numbers in the lottery.
Fig. 14 is a data format diagram of the database for administrating the lucky numbers (using lucky times).
Fig. 15 is a flowchart of operations performed to select the lucky numbers.
Fig. 16 is a display generated by a browser for ticket numbers other than the lucky number.
Fig. 17 is a display generated by a browser for the lucky numbers. Figures 9 to 17 do not refer to the claimed invention.

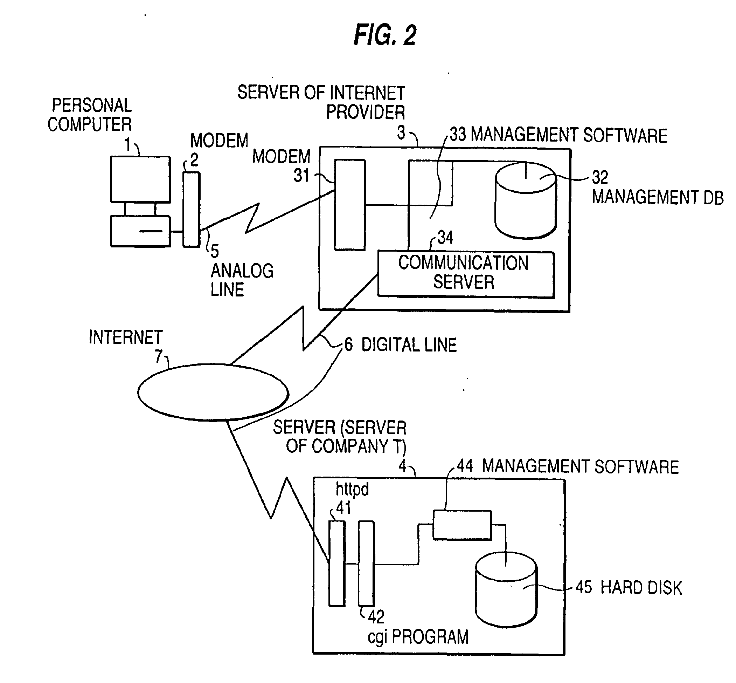

Embodiments of the present invention will be explained with reference to Fig. 2 to Fig. 17. By way of example, and for ease of understanding, the present invention will be explained below by reference to a data transmission system providing means for indicating the validity of the provenance of "advertising" data transmitted across the internet, and by reference to a system for the one-time per session only, transmission across the internet of one-time data indicating a "lottery" ticket or number. It will however be understood, that the technical means used for indicating the validity of the provenance of data, and for one-time data transmission, can be employed for many other purposes and that these means are not related to the content of the data or the significance or meaning attributed to the data by a user.

Fig. 2 is a system configuration diagram in relation to a preferred embodiment of the present invention. In Fig. 2, a personal computer 1 is connected by a modem 2 and an analog line 5, such as a telephone line, to a server 3 of an Internet provider having contracted with the owner of personal computer 1. In Fig. 2, the modem 2 is illustrated in a housing separate from the housing of personal computer 1, i. e., as an external modem, but the modem 2 may be in the same housing as personal computer 1, i. e., the modem 2 may be an internal modem. Alternatively, the connection between personal computer 1 and the server 3 may be by a digital line, such as an ISDN line and appropriate interfaces, such as a terminal adapter. The server 3 of the Internet provider is connected to the server 4 for offering information or service via the digital lines 6 (e. g., ISDN line) and Internet 7. The server 4 has installed therein the software in relation to the present invention.

The server 3 is composed of a modem 31 mediating communications with personal computer 1, a management database 32 for administrating the home page of persons who have contracted to have their home pages hosted by the server 3, management software 33 for administrating the management database and a communication server 34 for mediating communication with the Internet 7.

The server 4 is composed of a http demon (httpd) 41 and a cgi program 42. The httpd 41 administrates the server 4 and performs system control which should not be controlled directly by users. The cgi program 42 has a common gateway interface (cgi) and provides various kinds of services responding to requests from users.

The present invention may be implemented by the management software 44 and hard disk 45 or the management software 33 and management database 32. The present invention will be explained under the assumption that it is implemented by the management software 44 and hard disk 45. Therefore, it will be assumed that the server 4 provides the service of advertising on the Internet.

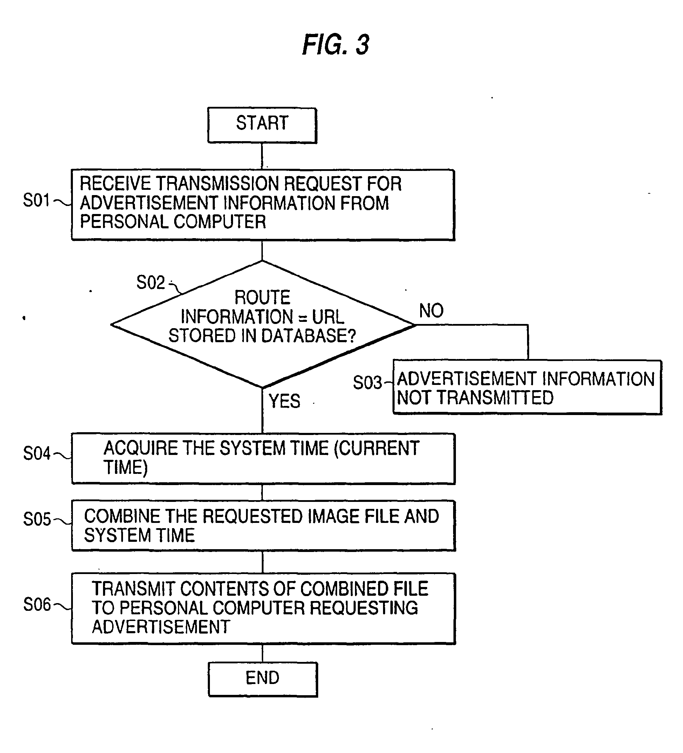

Fig. 3 is a flowchart for explaining the first embodiment of the present invention. Operations of the present invention will be explained with reference to Fig. 3.

In step S01, while browsing the Internet, the owner of personal computer 1 makes access to the home page of Mr. A shown in Fig. 1A. The home page of Mr. A may be provided by the server 3 or by another server (not illustrated) connected via the Internet. The browser of personal computer 1 acquires the HTML source shown in Fig. 1B from the server hosting Mr. A's home page.

Since the information about an advertisement Z is included in the HTML source of Mr. A's home page, in step S01 the browser of personal computer 1 transmits a transmission request for a file designated by "img src =". In this example, the transmission request is sent to the server 4 where the advertisement information is stored. In this case, the browser of personal computer 1 also transmits the routing information to the server 4 indicating the home page displayed when the transmission request is generated. This routing information is generally substituted into the parameter HTTP_REFERER and is then transmitted. The routing information in this example is the URL "http://www.provider-b.or.jp/B01/jazz.htm" of the home page of Mr. A.

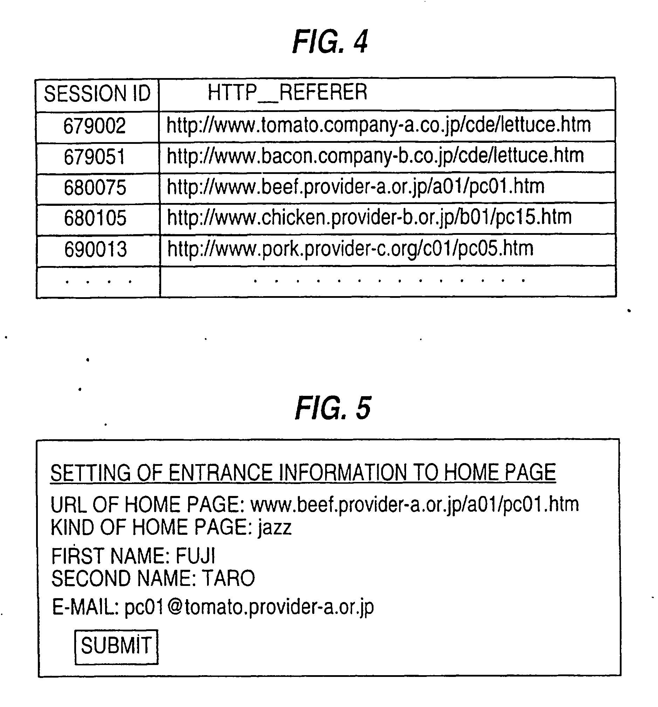

A registered database (Fig. 5) is used to protect the advertisement information from those who try to illegally acquire the advertisement (image file). As shown in Fig. 5, each record in the registered database in hard disk 45 contains the URL of a home page having a link to an advertisement administrated by the server 4, the kind or type of home page, and information identifying the advertisement. When management software 44 of server 4 receives the transmission request, the management software 44 determines (step S02) whether the routing information in the transmission request exists in the registered database in hard disk 45. If there is no routing information in the registered database (Fig. 5) corresponding to the transmission request, i. e., if HTTP_REFERER does not match one of the registered URLs in the database, in step S03 the management software 44 assumes the transmission request is an illegal request and does not transmit the advertisement information.

When the routing information in the transmission request matches an entry in the registered database (Fig. 5), the management software 44 begins processing the transmission request in step S04 by assigning a session ID for identifying the session. The session ID and routing information are stored as a pair in a session management database (Fig. 4) on the hard disk 45 by the management software 44.

In the illustrated example of Figure 5, the routing information, (the URL of Mr. A's home page in HTTP_REFERER referenced in the transmission request of personal computer 1) is associated with management number "0002" in the registered database. The management software 44 assigns session ID "680075" to this transmission request and stores the session ID "680075" and the routing information as a pair in the session management database illustrated in Fig. 4.

Next, the management software 44 acquires the system time (current time) that the transmission request issued. Alternatively, the system time of receiving the transmission request may be acquired, but it may be considered the same as the transmission date and time information transmitted with the transmission request in the step S01.

In step S05, the management software 44 combines the advertisement information of the image file designated by the transmission request and the system time obtained in the step S04. This combining will be explained later.

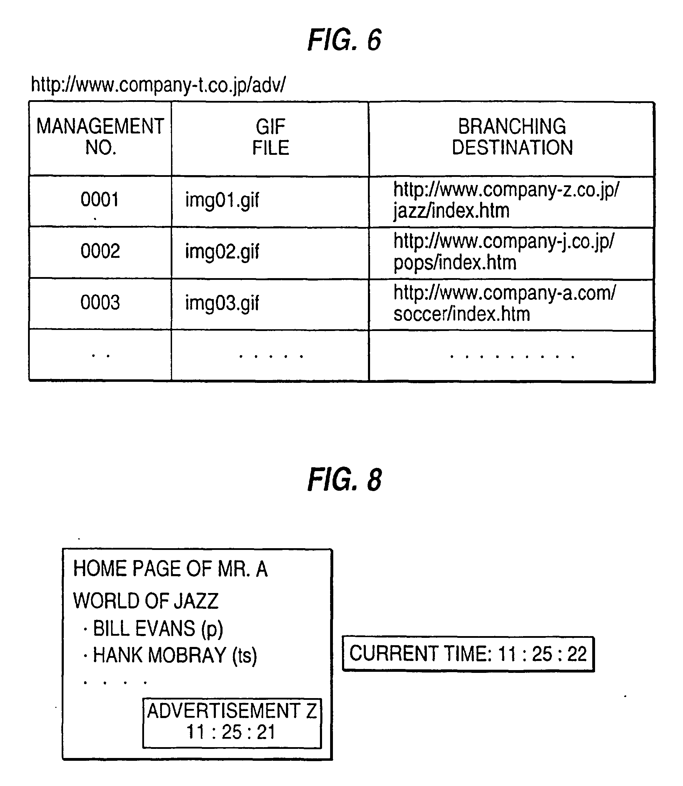

The management software 44 administrates the advertisement information of clients that is available for presentation in the advertisement information database on the hard disk 45 as shown in Fig. 6. Each entry in the advertisement information database includes a pointer to an image file (e. g., a GIF format image file) and a URL which is the branching destination when a user clicks on the image created by the image file. Details of how such an advertisement information database may be operated and administered can be found in our further European Patent application EP 0 852 351.

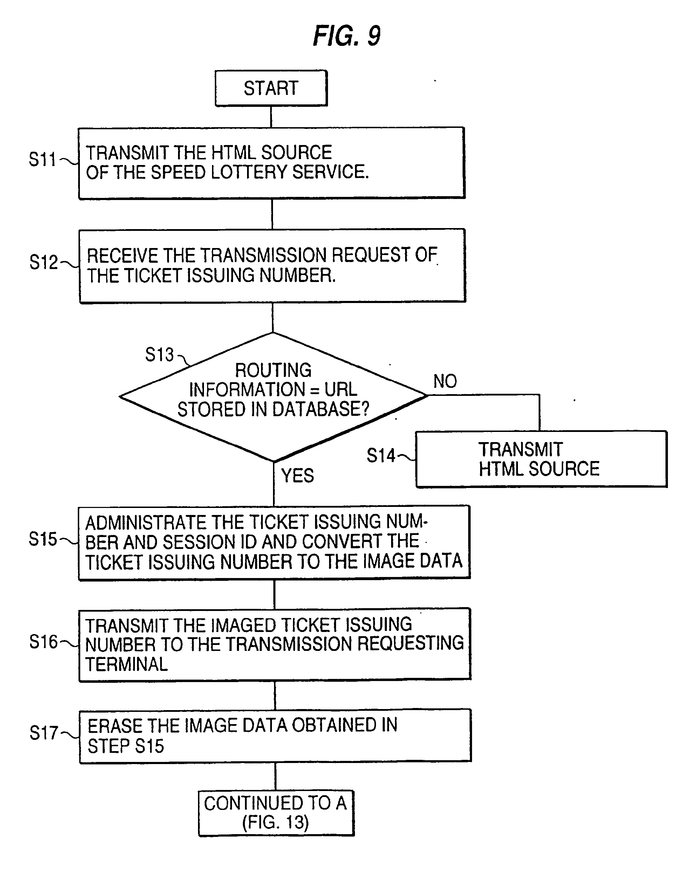

In step S06, the management software 44 transmits the advertisement information combined in step S05 to personal computer 1 which is the transmission requesting terminal. the browser of personal computer 1 displays the advertisement information received at a position designated on the basis of the HTML source (see Fig. 8).

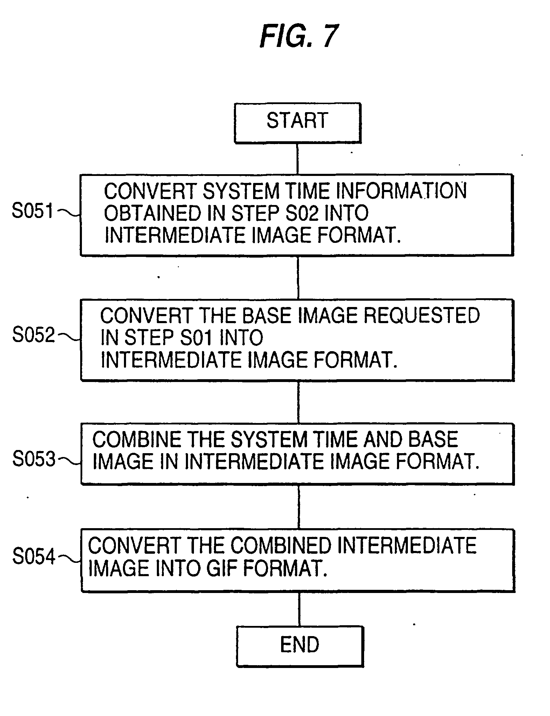

Next, combining of the advertisement information (hereinafter referred to as "base image") in step S05 of Fig. 3 and the system time will be explained with reference to Fig. 7. The system time (code data) and base image (GIF format) are not easily combined as explained hereunder because of differences in how each is stored.

In step S051, the management software 44 converts the system time (code data) obtained in step S04 into an intermediate image format for combining with the base image.

By way of example only, such an intermediate image format may be the ".pnm" general purpose image format made available by the software toolkit known as PBMPLUS, for UNIX computers.

In step S052, the management software 44 acquires the base image based on the file name designated by the advertisement information and register databases, and the transmission request. The management software 44 converts the base image (GIF format) obtained into the intermediate image format for combining with the system time.

In step S053, the management software 44 combines the system time and base image in intermediate image format to form a combined intermediate image. In step S054, the combined intermediate image is converted into a display advertisement in GIF format. Thus, in the combining method explained above, the advertisement information in GIF format is combined with the system time in a different format to produce verifiable advertisement information.

Fig. 8 is a diagram for explaining the verifiable advertisement information generated by the present invention. Fig. 8 indicates the display produced by the browser of personal computer 1 after receiving the verifiable advertisement information or display advertisement transmitted in step S06 of Fig. 3. As shown in Fig. 8 the advertisement Z shows the time "11:25:21" which is when the server received the transmission request for the advertisement Z. Meanwhile, a user of personal computer 1 sees the display contents of the browser at 11:25:22 (current time). The difference between these times results from the time required to combine and transmit the verifiable advertisement information by the server 4.

As explained above, the advertisement information administrated by the server of the present invention is combined with a time equal to the current time of display on personal computer 1 minus the time difference, namely a time near the current time. Therefore, if a person attempts to pose as another person by copying the display advertisement, i. e., the advertisement information combined with the time the request for the advertisement was received by the server 4, this attempt will be detected because the time displayed in the copy of the display advertisement will not be close to the current time of the home page containing the copy of the display advertisement. Since the display advertisement (verifiable advertisement information) is in GIF format, the illegal copier of the display advertisement would have to edit the GIF image and insert a new system time to simulate the operation of the management software 44.

Additional reliability of the advertisement information can be obtained if the person responsible for administration of server checks the identity of the person requesting the advertisement when the advertisement is registered in the server 4. Specifically, the administrator of the server has the person making a request present a certification of the company where he or she works or a certification of the product made or sold by that person's company. The administrator then checks the identity of the certification to determine if the company name displayed on the advertisement information is the same as the company name in the certification or, alternatively, that the product name displayed on the advertisement information is the same as the product name in the certification.

Next, the second embodiment of the present invention will be explained. Fig. 9 is a flowchart for explaining the second embodiment of the present invention.

According to the present invention, the user of personal computer 1 can access the home page of a speed lottery service in server 4, by clicking on the display advertisement on the home page in server 3 generated using advertisement information administered by server 4. In step S11, the server 4 receives from the browser of personal computer 1 an HTML source transmission request for the speed lottery service home page and routing information about the home page currently displayed by the browser. The management software 44 of server 4 receives the transmission request and assigns the session ID "680075" to identify this session. Thereafter, the management software 44 transmits the HTML source on the hard disk 45 to personal computer 1.

Based on the HTML source received in Step S11, the browser of personal computer 1 sends to the server 4 a transmission request for an image file in GIF format that will provide a description of a ticket issuing number. In step S12, the server 4 receives the transmission request for the GIF image file for displaying the ticket issuing number.

In step S13, the management software 44 determines whether the routing information received in step S11 matches a URL in the registered database (Fig. 5) administrated in the hard disk 45. Namely, the management software 44 determines whether the request for a ticket issuing number is from a browser displaying a home page which is recorded as having received advertisement information administered in the server 4.

In step S14, when the routing information (URL) is determined to be not in the registered database, the management software 44 transmits HTML source to the requesting terminal (personal computer 1) which will cause the browser to display an appropriate message. In this case, the management software 44 does not transmit the GIF file for displaying the ticket issuing number to the requesting terminal (personal computer 1).

In step S15, when the routing information (URL) is found in the registered database, the management software 44 assigns a ticket issuing number (code data) such as "75823" generated by a random number generator to the session ID, in this case "680075". The management software 44 administers the session ID, ticket issuing number (code data) and routing information in a ticket management database on the hard disk 45.

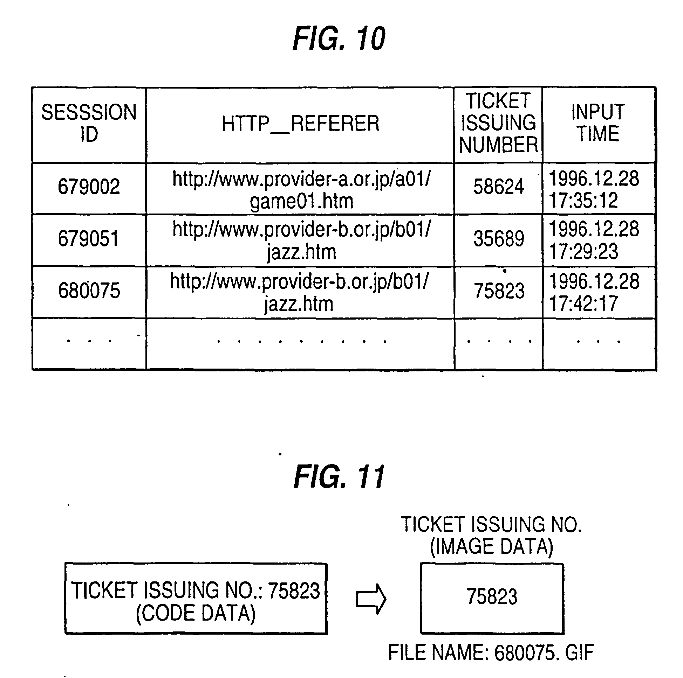

Fig. 10 is a data format diagram of the ticket management database having records containing the session ID, routing information, ticket issuing number and input time. As indicated in Fig. 10 the ticket issuing number for the session ID "680075" is "75823". The input time will be explained below.

The management software 44 converts the code data indicating the ticket issuing number into GIF format image data for displaying the ticket issuing number as illustrated in Fig. 11. The management software 44 designates the file name of the GIF format image data as the session ID followed by ".GIF" or in this example "680075.GIF".

Fig. 11 is a diagram depicting conversion by the management software 44 of the code data indicating the ticket issuing number, e. g., a binary integer representation, into image data in the GIF format for displaying the ticket issuing number. Such conversion is known in the related art and a detailed explanation will be omitted here.

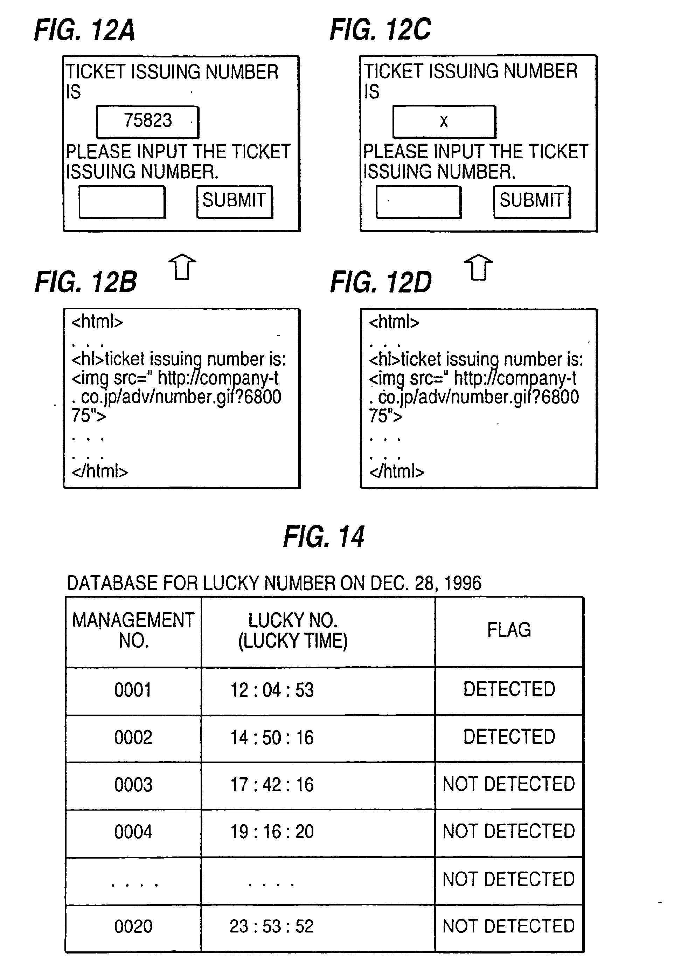

In step S16 of the flowchart in Fig. 9, the management software 44 transmits, to personal computer 1, the GIF file for displaying the ticket issuing number obtained in step S15, e. g., the file "680075.GIF". The browser running on personal computer 1 displays this GIF file in the position designated by the HTML source received in step S11, as illustrated in Fig. 12A.

Fig. 12A shows the ticket issuing number input display generated by the browser on personal computer 1, while Fig. 12B shows the HTML source that generates the display. As illustrated in Fig. 12A, the ticket issuing number given to the this session is "75823".

This ticket issuing number is a GIF format image file as explained above. Moreover, if a user observes the HTML source of the relevant display, he can see only a program name (number.gif) for determining the GIF file name and an argument ("680075") but cannot find the ticket issuing number.

In step S17, after the management software 44 transmits the GIF file for displaying the ticket issuing number in step S16, the GIF file (session ID.GIF, e..g., "680075.GIF") is erased.

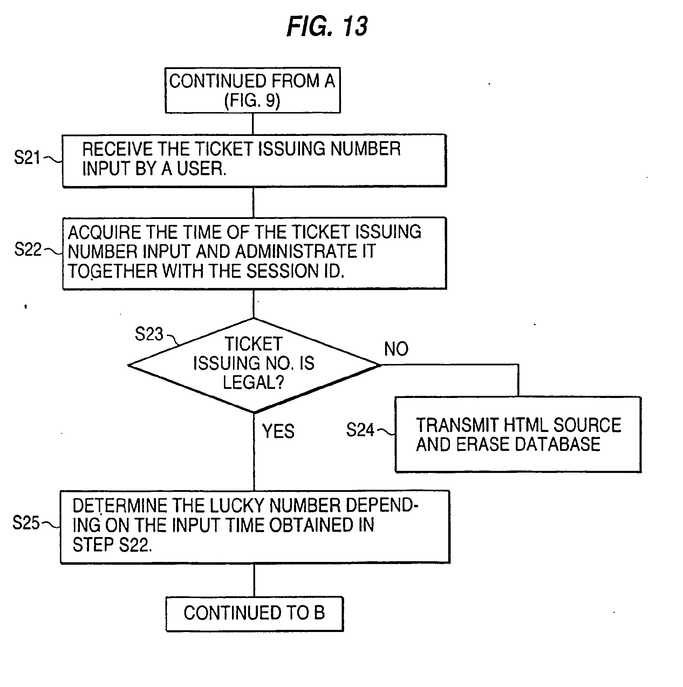

Accordingly, one ticket issuing number is guaranteed to be generated only once for each session ID. Namely, when a user of personal computer 1 has reloaded the display of the ticket issuing number, the browser of personal computer 1 does not display Fig. 12A but rather Fig. 12C. The browser on personal computer 1 cannot again obtain the GIF file for displaying the ticket issuing number from the server 4, because the GIF file has been erased. Furthermore, since the session ID already has an associated ticket issuing number in the ticket management database illustrated in Fig. 10 and the session ID.GIF file has been erased, the server 4 transmits a GIF file (see Fig. 13C) indicating that the session has performed an improper operation in place of the GIF file for displaying the ticket issuing number even though the HTML source code (see Fig. 12D) is the same as the HTML source code (see Fig. 12B) that generated the display illustrated in Fig. 12A.

Fig. 13 is a flowchart of operations for validation of ticket issuing numbers and selection of lucky numbers in the lottery. Fig. 13 is a continuation of Fig. 9 as indicated on Figs. 9 and 13. The browser of personal computer 1 is still generating the display illustrated in Fig. 12A which at the bottom requests input of the ticket issuing number by the users.

In step S21, a user inputs, responding to the request, the number "75823" (code data), same as the ticket issuing number (image data) displayed by the browser. The browser of personal computer 1 transmits the ticket issuing number input by the user to the server 4 together with the session ID. The management software 44 receives the ticket issuing number and session ID.

In step S22, the management software 44 obtains the system time of server 4 stored in the ticket management database (Fig. 10) corresponding to the session ID (Fig. 10). Fig. 10 indicates that the ticket issuing number input time of the session ID "680075" is "1996.12.28, 17:42:17".

In step S23, the management software 44 determines whether the ticket issuing number corresponding to session ID "680075" in the ticket management database which was stored in step S15 of Fig. 9 is the same as the ticket issuing number received from the user in step S21 of Fig. 13.

In step S24, when the ticket issuing numbers do not match, the management software 44 transmits HTML source to the transmission requesting terminal (personal computer 1) to inform the user, and the database entries for the session ID ("680075" in this case) are erased.

In step S25, when the ticket issuing numbers match, the management software 44 determines whether the ticket issuing number is the lucky number depending on the input time obtained in step S22 of Fig. 13.

In this example, the management software 44 determines that the ticket issuing number "75823" received from the user in step S21 of Fig. 13 matches the ticket issuing number "75823" for the session ID "680075" in the ticket management database (Fig. 10). Therefore, this example indicates that the ticket issuing number is a valid number. The management software 44 determines whether the ticket issuing number is the lucky number depending on the system time stored for the session ID "680075" in the ticket management database (Fig. 10).

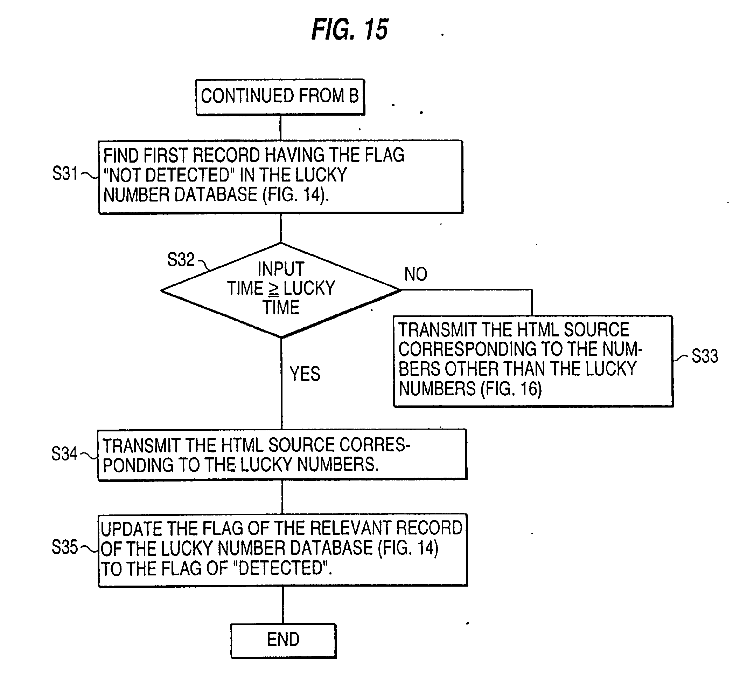

Fig. 14 is a data format diagram of the database administered for the lucky numbers or lucky times. The database illustrated in Fig. 14 shows lucky numbers of the date 1996.12.28 (December 28, 1996) and such lucky numbers are provided for every day.

As indicated in Fig. 14, there are 20 lucky numbers for the date, 1996.12.28 and the lucky times are "12:04:53", "14:50:16", "17:42:16", etc. Moreover, Fig. 14 also indicates that the lucky numbers have already been detected for the lucky times "12:04:53" and "14:50:16", but no lucky number has been detected for the lucky time "17:42:16" and the subsequent lucky times.

The lucky number database illustrated in Fig. 14 can be found in the hard disk 45 of the server 4. Fig. 15 is a flowchart of the operations for determining the lucky numbers. With reference to Fig. 14 and Fig. 15, operations of the management software 44 will be explained.

In step S31, the management software 44 retrieves the lucky number database (Fig. 14) for the input date. The management software 44 refers to the first record of the lucky number database having the flag "not detected". In this case, the management software 44 finds that the first record with the flag "not detected" has the management number "0003".

In step S32, the management software 44 extracts the input time "1996.12.28, 17:42:17" for the session ID "680075" from the ticket management database (Fig. 10). Then, the management software 44 determines whether the input time is later than the lucky time of the record found in the step S31.

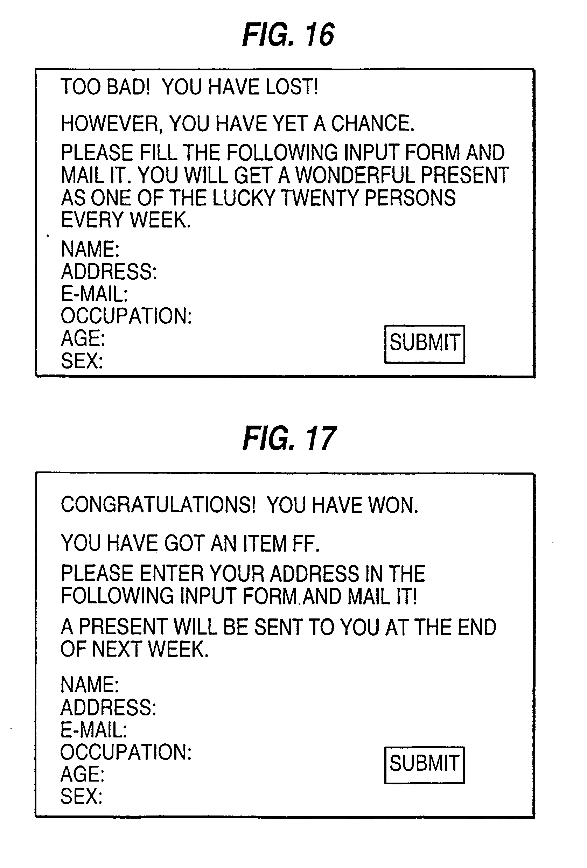

In step S33, when the input time is earlier than the lucky time, the management software 44 transmits to the requesting terminal identified by the session ID, the HTML source that will produce the display for the numbers other than the lucky numbers, as illustrated in Fig. 16. As illustrated in Fig. 16, persons receiving numbers other than the lucky numbers may receive another chance to get a prize by mailing a form after entering the specified items. A user can transmit the specified items to the server 4 by clicking the submit button after entering the specified items.

In step S34, when the input time is determined to be later than or the same as the lucky time, the management software 44 transmits to the requesting terminal identified by the session ID, the HTML source that will produce the display for the lucky number, as illustrated in Fig. 17.

In the case of the session ID "680075", since the input time "17:42:17" is larger than the lucky time "17:42:16", the management software 44 transmits the HTML source corresponding to the lucky number to personal computer 1 identified by the session ID "680075".

For the lucky numbers of the lottery, Fig. 17 shows a display requesting input of a delivery address for the prize. A user transmits the specified items to the server 4 by entering the specified items and then clicking the submit button.

In the above explanation, the present invention is installed in the server 4, but the present invention can naturally be stored in a memory medium before it is installed on a server. In this case, the memory medium includes means corresponding to the management software 44. However, when the program recorded on the memory medium is installed on a server, it operates as explained above, so the explanation is not repeated here.

Embodiments of the present invention provide the following effects.

The first effect is that even when an advertisement (image file) on the Internet is literally copied, it is very easy to determine whether the image file is the genuine file or a literal copy.

The second effect is that participation in a lottery for lucky numbers on the Internet several times with the same ticket issuing number through reloading of the ticket issuing page can be prevented.

A system embodying the invention can constitute an information offering system for providing information about advertisements to a transmission requesting terminal via a computer network, comprising:
a memory unit to store advertisement information;
a combining unit to produce combined information from the advertisement information and time information related to a transmission request for the advertisement information from the transmission requesting terminal when the advertisement information is requested to be transmitted; and
a transmitting unit to transmit the combined information to the transmission requesting terminal.

A system embodying the invention can constitute such an information offering system wherein the time information is a system time representing when said information offering system received a transmission request from the transmission requesting terminal.

A system embodying the invention can constitute such an information offering system
wherein said memory unit further stores identification information for a presentation terminal of an advertisement using the advertisement information, and
wherein said combining unit combines the time and advertisement information only if routing information transmitted from the presentation terminal exists within said memory unit.

A system embodying the invention can constitute such an information offering system wherein the time information is a system time in said information offering system existing when the transmission request is received.

A system embodying the invention can constitute an information offering system for providing information about lotteries to a transmission requesting terminal via a computer network, comprising:
a lottery ticket issuing unit to generate ticket issuing number information in code data format, for a session, using a session identifier identifying communication with the transmission requesting terminal when transmission of the lottery ticket issuing number information is requested by the transmission requesting terminal;
a converting unit to convert the code data of the ticket issuing number information into image data indicating the ticket issuing number; and
a transmitting unit to transmit the image data of the ticket issuing number information to the transmission requesting terminal.

A system embodying the invention can constitute such an information offering system
further comprising a memory unit to store identification information of a session, including routing information, and
wherein said converting unit converts the code data of the ticket issuing number information into the image data when the routing information transmitted from the transmission requesting terminal exists within said memory unit.

A system embodying the invention can constitute such an information offering system
wherein said memory unit further stores identification information for a presentation terminal of an advertisement, and
wherein said converting unit converts the code data of the ticket issuing number information into the image data when the routing information transmitted from the transmission requesting terminal matches the identification information of the presentation terminal displaying the advertisement.

A system embodying the invention can constitute such an information offering system further comprising an erasing unit to erase the image data indicating the ticket issuing number after transmission of the ticket issuing number information.

A system embodying the invention can constitute an information offering system for providing lucky numbers within a lottery from among ticket issuing members given out to users on a computer network, comprising:
a memory unit to store the lucky members;
a source transmitting unit to transmit to a transmission requesting terminal, input request source code requesting input of a ticket issuing number, when transmission of lottery information is requested;
a judging unit to determine whether a ticket has won depending on an input time of the ticket issuing number and the lucky numbers; and
a transmitting unit to transmit lottery result source code to said transmission requesting terminal, corresponding to determination by said judging unit.

A system embodying the invention can constitute such an information offering system
further comprising a management unit to manage the identification information of the presentation terminal, and
wherein said source transmitting unit transmits said lottery result source code when the routing information transmitted from the transmission requesting terminal matches any identification information in said management unit.

The present invention also provides at least one computer program embodied on a computer-readable medium providing information about advertisements on a computer network, comprising:
a combining segment to produce combined information from advertisement information and time information related to a transmission request for the advertisement information from a transmission requesting terminal, when the transmission request is accepted; and
a transmitting segment to transmit the combined information to the transmission requesting terminal.

The present invention further provides at least one computer program embodied on a computer-readable medium providing information about a lottery on a computer network, comprising:
an issuing segment to issue, when transmission of ticket issuing number information of the lottery is requested, the ticket issuing number information as code data for every identifier identifying communication with a transmission requesting terminal;
a converting segment to convert the code data of the ticket issuing number information into image data indicating the ticket issuing number; and
a transmitting unit for transmitting the image data indicating the ticket issuing number information to the transmission requesting terminal.

The present invention also provides a method of providing lucky numbers within a lottery from among ticket issuing numbers given out to users on a computer network, comprising:
creating the lucky numbers;
transmitting to a transmission requesting terminal, input request program code requesting input of a ticket issuing number, when transmission of lottery information is requested by the transmission requesting terminal;
determining whether a ticket has won depending on an input time of the ticket issuing number and the lucky numbers; and
transmitting to the transmission requesting terminal result program code based on said determining.

An embodiment of the present invention can provide a lottery on a network like the Internet which is more easily attained by preventing impersonation and validating participation. In a preferred embodiment, the opportunity to participate in the lottery is a reward for viewing an advertisement. When the advertisement is viewed a lottery ticket issuing number is displayed as an image file on the browser of the user viewing the advertisement. The image file is sent from the server providing the lottery service to the browser with HTML source to display the number. The image file on the lottery server is deleted after being sent, so that if the user requests re-display of the ticket issuing number display, the number cannot be obtained. The lottery server maintains a database of date and time stamped requests for lottery ticket issuing numbers to prevent multiple requests during a single session. The user is requested to input the number displayed by the browser to find out whether it is a winning number. The lottery server maintains a file with predetermined lucky times that are compared with the time that the user input the number. The first user to input a lottery number at a time that is at least as late as one of the lucky times is a winner and a form is sent to the user's browser for sending the prize that is won.

## Claims

1. A information transmission system providing means for indicating the validity of the provenance of the information transmitted across a computer network, the system comprising
a memory unit (45) storing advertisement information intended for transmission across the network,
means operable to retrieve said advertisement information from the memory unit in response to a request, by a transmission requesting terminal (1), for transmission of said advertisement information when it is requested for transmission of said advertisement information,
means (44) operable, in response to said request, to generate time information related to said request for transmission of said advertisement information,
a combining unit (44) operable to combine said advertisement information with said time information,
a transmission unit (44) for transmitting said combined advertisement information to the transmission requesting terminal across the network.

2. A system as claimed in claim 1, the transmission requesting terminal including means for displaying the time information contained in the combined advertisement information received thereby from the network, and means for determining a current time upon display of the time information contained in the combined advertisement information,
whereby the means for determining a current time are designed so that if the time information included in the combined advertisement information is determined to closely coincide with the current time upon display at the transmission requesting terminal this is taken as an indication that the advertisement information is of valid provenance, and whereby if the time information included in the combined advertisement information is determined not to closely coincide with the current time upon display, this is taken as an indication that the transmitted combined data is copied or pirated data of invalid provenance which may thus may be associated with corrupted or altered network routing or link information.

3. A system as claimed in claim 1 or 2, wherein the advertisement information stored in the memory unit, intended for transmission across the network, is image data, and wherein the time information generated by the system is not image data, the combining unit comprising
means operable to convert image data retrieved from the memory unit to an intermediate image format permitting image editing,
means operable to convert the time information generated by the system into the intermediate image format,
means operable to combine the converted image data and converted time information into a combined image in the intermediate image format, and means operable to convert the combined image from the intermediate image format to an image format for transmission across the network, and to transmit the resultant image data as the said combined data.

4. A system as claimed in claim 1, 2 or 3, wherein the time information generated by the system is a system time representing when the system received said transmission request from the transmission requesting terminal.

5. A system as claimed in claim 1, 2, 3 or 4, wherein said memory unit further stores identification information for a presentation terminal of the advertisement information intended for transmission across the network, using the advertisement information, and
wherein said combining unit is adapted to combine the time information and the advertisement information only if routing information transmitted from the presentation terminal exists within said memory unit.

6. A computer-readable medium for providing data on a computer network and containing at least one computer program, the at least one computer program comprising:
a combining segment to produce combined information from advertisement information and time information related to a transmission request for the advertisement information from a transmission requesting terminal, when the transmission request is accepted; and
a transmitting segment to transmit the combined advertisement information to the transmission requesting terminal.

## Patentansprüche

1. Informationstransmissionssystem, welches eine Einrichtung zum Angeben der Gültigkeit der Herkunft der über ein Computernetz gesendeten Informationen vorsieht, wobei das System umfasst:
eine Speichereinheit (45), die zur Transmission über das Netz bestimmte Werbeinformationen speichert,
eine Einrichtung, die betreibbar ist, die Werbeinformationen von der Speichereinheit ansprechend auf eine Anforderung von einem Transmissionsanforderungsterminal (1) abzufragen, zur Transmission der Werbeinformationen, wenn von ihr die Transmission der Werbeinformationen angefordert wird,
eine Einrichtung (44), die betreibbar ist, ansprechend auf die Anforderung, Zeitinformationen in Bezug auf die Anforderung zur Transmission der Werbeinformationen zu generieren,
eine Kombinationseinheit (44), die betreibbar ist, die Werbeinformationen mit den Zeitinformationen zu kombinieren,
eine Transmissionseinheit (44) zum Senden der kombinierten Werbeinformationen zum Transmissionsanforderungsterminal über das Netz.

2. System nach Anspruch 1, wobei das Transmissionsanforderungsterminal eine Einrichtung zum Anzeigen der Zeitinformationen, welche in den kombinierten Werbeinformationen enthalten sind, die **dadurch** vom Netz empfangen werden, und Einrichtungen zum Feststellen einer aktuellen Zeit bei der Anzeige der in den kombinierten Werbeinformationen enthaltenen Zeitinformationen einschließt,
wodurch die Einrichtungen zum Feststellen einer aktuellen Zeit so ausgebildet sind, dass, wenn festgestellt wird, dass die in den kombinierten Werbeinformationen eingeschlossenen Zeitinformationen eng mit der aktuellen Zeit bei der Anzeige am Transmissionsanforderungsterminal zusammenfallen, dies als Angabe herangezogen wird, dass die Werbeinformationen eine gültige Herkunft aufweisen, und wodurch, wenn festgestellt wird, dass die in den kombinierten Werbeinformationen eingeschlossenen Zeitinformationen nicht eng mit der aktuellen Zeit bei der Anzeige zusammenfallen, dies als Angabe herangezogen wird, dass die gesendeten kombinierten Daten kopierte oder raubkopierte Daten ungültiger Herkunft sind, die so mit verfälschten oder abgeänderten Netzleitweg- oder -verknüpfungsinformationen assoziiert sein können.

3. System nach Anspruch 1 oder 2, bei welchem die in der Speichereinheit gespeicherten Werbeinformationen, die zur Transmission über das Netz bestimmt sind, Bilddaten sind, und bei welchem die vom System generierten Zeitinformationen keine Bilddaten sind, wobei die Kombinationseinheit umfasst:
eine Einrichtung, die betreibbar ist, von der Speichereinheit abgefragte Bilddaten in ein Zwischenbildformat zu konvertieren, das eine Bildbearbeitung ermöglicht,
eine Einrichtung, die betreibbar ist, die von dem System generierten Zeitinformationen in das Zwischenbildformat zu konvertieren,
eine Einrichtung, die betreibbar ist, die konvertierten Bilddaten und konvertieren Zeitinformationen in ein kombiniertes Bild in dem Zwischenbildformat zu kombinieren, und
eine Einrichtung, die betreibbar ist, das kombinierte Bild vom Zwischenbildformat in ein Bildformat zur Transmission über das Netz zu konvertieren, und die resultierenden Bilddaten als kombinierte Daten zu senden.

4. System nach Anspruch 1, 2 oder 3, bei welchem die von dem System generierten Zeitinformationen eine Systemzeit sind, die repräsentiert, wann das System die Transmissionsanforderung von dem Transmissionsanforderungsterminal empfangen hat.

5. System nach Anspruch 1, 2, 3 oder 4, bei welchem die Speichereinheit ferner Identifikationsinformationen für ein Präsentationsterminal der Werbeinformationen speichert, die zur Transmission über das Netz bestimmt sind, wobei die Werbeinformationen verwendet werden, und
bei welchem die Kombinationseinheit eingerichtet ist, die Zeitinformationen und die Werbeinformationen nur dann zu kombinieren, wenn von dem Präsentationsterminal gesendete Leitweginformationen in der Speichereinheit existieren.

6. Computerlesbares Medium, zum Vorsehen von Daten auf einem Computernetz, und welches zumindest ein Computerprogramm enthält, wobei das zumindest eine Computerprogramm umfasst:
ein Kombinationssegment, um kombinierte Informationen aus Werbeinformationen und Zeitinformationen in Bezug auf eine Transmissionsanforderung für die Werbeinformationen von einem Transmissionsanforderungsterminal zu erzeugen, wenn die Transmissionsanforderung akzeptiert wird; und
ein Transmissionssegment zum Senden der kombinierten Werbeinformationen zum Transmissionsanforderungsterminal.

## Revendications

1. Système de transmission d'informations produisant des moyens destinés à indiquer la validité de la provenance des informations transmises à travers un réseau d'ordinateur, le système comprenant :
une unité de mémoire (45) stockant des informations publicitaires prévues pour une transmission à travers le réseau,
des moyens pouvant fonctionner afin de récupérer lesdites informations publicitaires depuis l'unité de mémoire en réponse à une requête, par une borne de requête de transmission (1), pour la transmission des dites informations publicitaires lorsqu'il est requis une transmission des dites informations publicitaires,
des moyens (44) pouvant fonctionner, en réponse à ladite requête, afin de générer des informations de temps liées à ladite requête pour la transmission des dites informations publicitaires,
une unité de combinaison (44) pouvant fonctionner afin de combiner lesdites informations publicitaires avec lesdites informations de temps,
une unité de transmission (44) destinée à transmettre lesdites informations publicitaires combinées vers la borne de requête de transmission à travers le réseau.

2. Système selon la revendication 1, la borne de requête de transmission comprenant des moyens destinés à afficher les informations de temps contenues dans les informations publicitaires combinées reçues ainsi depuis le réseau et des moyens destinés à déterminer un temps actuel lors de l'affichage des informations de temps contenues dans les informations publicitaires combinées,
ce qui entraîne que les moyens destinés à déterminer un temps actuel sont désignés de telle sorte que si les informations de temps comprises dans les informations publicitaires combinées sont déterminées comme coïncidant étroitement avec le temps actuel lors de l'affichage au niveau de la borne de requête de transmission cela est pris comme une indication que les informations publicitaires sont de provenance valide et ce qui entraîne que si les informations de temps comprises dans les informations publicitaires combinées sont déterminées comme ne coïncidant pas étroitement avec le temps actuel lors de l'affichage, cela est pris comme une indication que les données combinées transmises sont des données copiées ou piratées de provenance invalide et peuvent ainsi être associées avec des informations de routage ou de liaison de réseau corrompues ou altérées.

3. Système selon la revendication 1 ou 2, dans lequel les informations publicitaires stockées dans l'unité de mémoire, prévues pour une transmission à travers le réseau, sont des données d'image et dans lequel les informations de temps générées par le système ne sont pas des données d'image, l'unité de combinaison comprenant
des moyens pouvant fonctionner afin de convertir des données d'image récupérées depuis l'unité de mémoire vers un format d'image intermédiaire permettant l'édition d'image,
des moyens pouvant fonctionner afin de convertir les informations de temps générées par le système en le format d'image intermédiaire,
des moyens pouvant fonctionner afin de combiner les données d'image converties et les informations de temps converties en une image combinée dans le format d'image intermédiaire, et
des moyens pouvant fonctionner afin de convertir l'image combinée depuis le format d'image intermédiaire vers un format d'image pour une transmission à travers le réseau et afin de transmettre les données d'image résultantes comme lesdites données combinées.

4. Système selon la revendication 1, 2 ou 3, dans lequel les informations de temps générées par le système est un temps de système représentant le moment où le système reçoit ladite requête de transmission depuis la borne de requête de transmission.

5. Système selon la revendication 1, 2, 3 ou 4, dans lequel ladite unité de mémoire stocke en outre des informations d'identification pour une borne de présentation des informations publicitaires prévues pour une transmission à travers le réseau, en utilisant les informations publicitaires, et
dans lequel ladite unité de combinaison est adaptée à combiner les informations de temps et les informations publicitaires uniquement si des informations de routage transmises depuis la borne de présentation existent à l'intérieur de ladite unité de mémoire.

6. Support pouvant être lu par ordinateur destiné à produire des données sur un réseau d'ordinateur et contenant au moins un programme informatique, le au moins un programme informatique comprenant :
un segment de combinaison destiné à produire des informations combinées depuis les informations publicitaires et les informations de temps liées à une requête de transmission pour les informations publicitaires depuis une borne de requête de transmission, lorsque la requête de transmission est acceptée ; et
un segment de transmission destiné à transmettre les informations publicitaires combinées vers la borne de requête de transmission.
